(19) Europäisches Patentamt
European Patent Office
Office européen des brevets

(11) EP 4 564 511 A1

(12) EUROPEAN PATENT APPLICATION
published in accordance with Art. 153(4) EPC

(43) Date of publication:
**04.06.2025 Bulletin 2025/23**

(21) Application number: **23877732.0**

(22) Date of filing: **13.10.2023**

(51) International Patent Classification (IPC):
***H01M 10/0565*** *(2010.01)* ***H01M 10/052*** *(2010.01)*
***C08G 65/24*** *(2006.01)* ***C08L 71/02*** *(2006.01)*
***C08K 3/013*** *(2018.01)* ***C08J 5/22*** *(2006.01)*

(52) Cooperative Patent Classification (CPC):
**C08G 65/24; C08J 5/22; C08K 3/013; C08L 71/02; H01M 10/052; H01M 10/0565**

(86) International application number:
**PCT/KR2023/015792**

(87) International publication number:
**WO 2024/080809 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 KR 20220132781**
**12.10.2023 KR 20230136064**

(71) Applicant: **LG Energy Solution, Ltd.**
**Seoul 07335 (KR)**

(72) Inventors:
- **NAM, Sung Hyun**
  **Daejeon 34122 (KR)**
- **HAN, Hyea Eun**
  **Daejeon 34122 (KR)**
- **KIM, Dong Kyu**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) SOLID POLYMER ELECTROLYTE AND ALL-SOLID-STATE BATTERY COMPRISING SAME

(57) The present disclosure relates to a polymer solid electrolyte and an all solid-state battery comprising the same. The polymer solid electrolyte includes a polymer containing PEO(polyethylene oxide)-based copolymer containing a crosslinkable functional group; and a polar compound, wherein at least a part of the crosslinkable functional group forms a crosslinking bond with each other, so that the polymer forms a three-dimensional network structure, and wherein the polar compound in a gaseous state is contained in the three-dimensional network structure or is bonded onto the polymer chain, and satisfies predetermined characteristics.



Processed by Luminess, 75001 PARIS (FR)

## Description

### [TECHNICAL FIELD]

Cross Citation with Related Application(s)

This application claims the benefit of Korean Patent Application No. 10-2022-0132781 filed on October 14, 2022 and Korean Patent Application No. 10-2023-0136064 filed on October 12, 2023 in the Korean Intellectual Property Office, the disclosures of which are incorporated herein by reference in their entirety.

The present disclosure relates to a polymer solid electrolyte and an all solid-state battery comprising the same.

### [BACKGROUND]

A lithium ion battery using a liquid electrolyte has a structure in which a negative electrode and apositive electrode are defined by a separator, and thus may cause a short-circuit when the separator is damaged by deformation or external impact, resulting in a risk, such as overheating or explosion. Therefore, it can be said that development of a solid electrolyte capable of ensuring safety is a very important issue in the field of lithium ion secondary batteries.

A lithium secondary battery using a solid electrolyte is advantageous in that it is enhanced in safety, prevents leakage of an electrolyte to improve the reliability of a battery, and facilitates manufacture of a thin battery. In addition, lithium metal can be used as a negative electrode to improve energy density, and therefore, it has been expected to be applied to a high-capacity secondary battery for electric vehicles in addition to a compact secondary battery, and thus has been spotlighted as a next-generation battery.

Among solid electrolytes, the composite electrolyte of polyethylene oxide (PEO) and lithium salt has the advantage of having higher ignition stability compared to conventional liquid electrolytes, but had limitations in that due to the high crystallinity possessed by polyethylene oxide (PEO), it was difficult to prepare a polymer solid electrolyte with improved ionic conductivity.In other words, the high crystallinity of the polymer impedes the chain mobility of the polymer chain, and thus, the movement of lithium ions within the polymer solid electrolyte is limited, which made it difficult to improve the ionic conductivity of polymer solid electrolytes.

In order to overcome the limitations of the conventional polymer solid electrolyte, attempts have been made to modify the structure of the crystalline polymer or add a separate plasticizer to the polymer to improve the mobility of the polymer chain and thus enhance the ionic conductivity of the polymer solid electrolyte. However, the solid polymer electrolyte prepared by using such structural deformation of polymers and addition of plasticizers may be difficult to improvethe ionic conductivity above the 0.1 mS/cm level.

Attempts have been made to improve the ionic conductivity by directly adding a liquid electrolyte or a solvent to the polymer solid electrolyte, but this can be classified as a technology for an electrolyte for a semi-solid-state battery in which a solid and a liquid coexist, rather than a pure solid electrolyte for an all-solid-state battery,the improvement in ionic conductivity is not sufficient, and it is still necessary to inject a considerable amount of liquid electrolyte, which makes it difficult to completely solve the problem of deterioration in safety due to liquid leakage.

Therefore, in addition to the polymer solid electrolyte prepared by modifying the structure of the polymer, adding a separate plasticizer, or immersing the solid electrolyte in the liquid electrolyte, there is a need to develop a technology that can improve the ionic conductivity of the electrolyte as a pure solid electrolyte for all-solid-state batteries.

[Prior Art Literature]

[Patent Literature]

(Patent Literature 1) Japanese Unexamined Patent Publication No. 1994-124713

### [DETAILED DESCRIPTION OF THE INVENTION]

### [Technical Problem]

It is an object of the present disclosure to provide a polymer solid electrolyte, which can improve ionic conductivity even when a very small amount of a polar compound (e.g., a polar solvent compound) is added to the polymer solid electrolyte in a non-liquid state.

It is another object of the present disclosure to provide an all-solid-state battery which includes the polymer solid electrolyte and thus exhibits improved ionic conductivity, and the like.

**[Technical Solution]**

According to one embodiment of the present disclosure, there is provided a polymer solid electrolyte comprising: a polymer containing PEO(polyethylene oxide)-based copolymer containing a crosslinkable functional group; and a polar compound, wherein at least a part of the crosslinkable functional group forms a crosslinking bond with each other, so that the polymer forms a three-dimensional network structure, and wherein the polar compound in a gaseous state is contained in the three-dimensional network structure or is bonded onto the polymer chain, and satisfies the following Equation 1:

<Equation 1>

$$\frac{t_R}{t_D} > 10$$

wherein, in Equation 1, $t_R$ is the relaxation time of the polymer chain, $t_D$ is the diffusion time of the polar compound within the polymer chain, and is defined by the following Equation 2,

<Equation 2>

$$t_D = \frac{L^2}{2D}$$

**wherein,** in Equation 2, D is the diffusion coefficient of the polar compound within the polymer chain, which is $10^{-9}$ to $10^{-6}$ $cm^2/s$, and L is the thickness of the polymer solid electrolyte, which is 5 to 500 $\mu$m.

**In** such a polymer solid electrolyte, the polar compound in a gaseous state is dispersed between polymer chains forming a three-dimensional network structure, or may be adsorbed or bonded to the surface or interior of the polymer chain.

**The** polymer solid electrolyte may further comprise a crosslinking agent, wherein at least a part of the crosslinkable functional group forms a crosslinking bond with each other through a crosslinking agent.

**In** the polymer solid electrolyte, the PEO-based copolymer may include one or more types, or two or more types of crosslinkable functional groups, and the crosslinkable functional group is bonded to the PEO-based copolymer through an alkylene linker or alkylene oxide linker having 0 to 10 carbon atoms (provided that an alkylene linker having 0 carbon atoms represents a single bond), and may be selected from the group consisting of a hydroxyl group, a carboxyl group, an isocyanate group, a nitro group, a cyano group, an amine group, an amide group, an epoxy group and an allyl group.

Further, the polymer solid electrolyte may further comprise a lithium salt dispersed on the polymer forming the three-dimensional network structure, and such a lithium salt may be included in cationic and anionic states in which at least a part thereof are dissociated. **The** cations and/or anions may exist in a state bonded onto the polymer chain, and may move during charge/discharge of the battery.

In a specific embodiment, the PEO (polyethylene oxide)-based copolymer of the polymer solid electrolyte is a copolymer containing repeating units of the following Chemical Formulas 1 to 3:

[Chemical Formula 1]

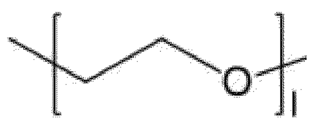

[Chemical Formula 2]

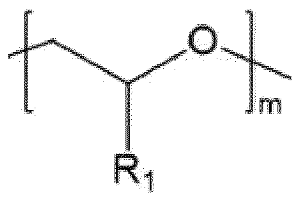

[Chemical Formula 3]

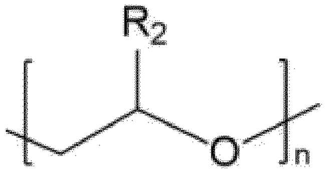

wherein, in Chemical Formulas 1 to 3, $R_1$ represents $-CH_2-O-(CH_2-CH_2-O)_k-R_3$, k is 0 to 20, $R_3$ represents an alkyl group having 1 to 5 carbon atoms,$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms (provided that an alkylene linker having 0 carbon atoms represents a single bond), and l, m and n are the number of repetitions of the repeating unit, wherein l and n are each independently an integer of 1 to 1000, and m is an integer of 0 to 1000.

Meanwhile, in such a polymer solid electrolyte, the content of the polar compound may be 0.1% by weight or more and less than 10% by weight, based on the total weight of the polymer solid electrolyte.

Further, the polar compound may include at least one selected from the group consisting of a carbonate-based compound and a sulfonyl-based compound, and may be a polar compound derived from a carbonate-based solvent or a sulfonyl-based solvent and contained in a gaseous state.

Meanwhile, the polymer solid electrolyte may further comprise a ceramic compound dispersed within a three-dimensional network structure of the polymer. Such a ceramic compound may comprise an oxide-based solid electrolyte of lithium metal oxide or lithium metal phosphate, and more specifically may include at least one oxide-based solid electrolyte selected from the group consisting of lithium-lanthanum-zirconium oxide(LLZO)-based compound, lithium-silicon-titanium phosphate(LSTP)-based compound, lithium-lanthanum-titanium oxide(LLTO)-based compound, lithium-aluminum-titanium phosphate(LATP)-based compound, lithium-aluminum-germanium phosphate(LAGP)-based compound, and lithium-lanthanum-zirconium-titanium oxide (LLZTO)-based compound.

Meanwhile, according to another embodiment of the invention, there is provided an all solid-state battery comprising: a positive electrode; a negative electrode; and an electrolyte layer interposed between the positive electrode and the negative electrode and including the polymer solid electrolyte of one embodiment as mentioned above.

**[Advantageous Effects]**

A polymer solid electrolyte according to one embodiment of the present disclosure can improve the mobility of polymer chains and exhibit further improved ionic conductivity, while maintaining the original structural characteristics of the polymer without deforming or destroying the material.

In particular, the polymer solid electrolyte contains a very small amount of a polar compound in a gaseous state through vapor deposition, which can thus improve the ionic conductivity and mechanical properties of the polymer solid electrolyte. Furthermore, when a polar solvent and a polar compound derived therefrom are included in the polymer solid electrolyte by vapor deposition, it is possible to prevent gelation and delay the relaxation time of the internal polymer chain, improve the mobility of the polymer chain, thereby improving the ionic conductivity without deteriorating mechanical properties.

In particular, the present inventors have found that not only the relaxation time of the polymer chain, but also the time for the polar compound to diffuse within the polymer chain due to vapor deposition is related to ionic conductivity. Therefore, it was confirmed that the effect of improving the ionic conductivity of the polymer solid electrolyte can be maximized by controlling the relaxation time of the polymer chain and the diffusion time of the polar compound contained in

the polymer solid electrolyte.

In addition, the polymer solid electrolyte may further include a uniformly dispersed ceramic compound, thereby further improving its ionic conductivity.

## [DETAILED DESCRIPTION OF THE EMBODIMENTS]

Hereinafter, specific embodiments will be described in more detail for a better understanding of the present disclosure.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

With regard to the term "bond" as used herein, that is, the conformation in which a polar compound is "bonded" to a polymer chain, e.g., a chain of a PEO-based copolymer, the term "bond" broadly refers to a conformation in which a polar compound in a gaseous state, which is a polar solvent molecule, is maintained a state fixed to a polymer chain by vapor deposition of a polar solvent. In other words, the "bond" is not limited to a specific type of physical bond, chemical bond, etc., and means including a state fixed by various bonds, including physical bonds, chemical bonds, etc., or a state simply attached and fixed, such as by adsorption, etc., or a state that is included in a three-dimensional network structure formed by crosslinking of the polymer, and is located and fixed adjacent to a polymer chain or crosslinking structure.

**The** term "three-dimensional network structure" as used herein is a structure that includes a three-dimensional frame and an internal space formed by the frame, wherein the frame may include a polymer chain that includes a crosslinking bond formed by the crosslinkable functional groups, e.g., a crosslinking bond between crosslinkable functional groups and/or a crosslinking bond between crosslinkable functional groups and a crosslinking agent. The three-dimensional network structure may also be referred to as a crosslinked structure.

In the present disclosure, the presence or inclusion of a polar compound (polar solvent) in a polymer solid electrolyte in a "gaseous state" indicates that the polar compound is deposited in a vapor state, unlike the case where the polar solvent or the electrolyte containing the same is injected in a liquid state, and the polar compound exists in a state distinct from the liquid injected electrolyte immediately after preparing the polymer solid electrolyte or during the charging and discharging process of an all-solid-state secondary battery containing the same. However, depending on the storage or operating conditions of the polymer solid electrolyte and/or secondary battery, the vapor-deposited polar compound may have a locally or temporarily liquefied state. Even in such a case, the vapor-deposited polar compound exhibits a higher mobility than the polar solvent injected in a liquid state, and exhibits a state different from the polar solvent in aliquid state, which can also be considered to exist or be included in the "gaseous state" mentioned above.

In addition, as used herein, the term "polymer solid electrolyte" includes as essential components(i) a polymer including a polyethylene oxide (PEO)-based copolymer containing a crosslinkable functional group; and a polar compound, or means (ii) a polymer solid electrolyte further including a ceramic compound in (i) above. The polymer solid electrolyte (ii) further comprising a ceramic compound in (i) above may be referred to as a "composite solid electrolyte".

On the other hand, conventionally, in order to improve the ionic conductivity of the solid electrolyte, a solid electrolyte was immersed in or supported on a liquid electrolyte or a solvent, or the liquid electrolyte or solvent was directly injected into the solid electrolyte in a liquid state. When a liquid electrolyte or solvent is added directly to the solid electrolyte in this way, it has the effect of improving the ionic conductivity of the solid electrolyte, but this is merely an effect of increasing the ionic conductivity of the solid electrolyte based on the high ionic conductivity of the liquid itself, and the degree of improvement thereof is also not sufficient, and it is necessary to inject a considerable amount of liquid electrolyte. In other words, since the conduction of lithium ions is achieved by the liquid electrolyte added to the solid electrolyte rather than the inherent physical properties of the solid electrolyte, it is far from improving the physical properties of the solid electrolyte itself. Further, when a liquid electrolyte or solvent was added or injected directly into a polymer solid electrolyte in liquid form, there was a problem that the structure of the solid electrolyte collapsed due to unexpected side reactions between the polymer and the liquid phase, such as damage to the polymer chain or breaking of bonds within the polymer, or a decrease in ionic conductivity resulting therefrom.

Further, when solvent or liquid electrolyte is directly injected into the solid electrolyte, liquid molecules rapidly diffuse within the solid electrolyte to rapidly cause a relaxation phenomenon of the polymer chain and promote gelation on the surface, which may lead to a decrease in mechanical properties, and problems such as liquid leakage of the liquid electrolyte may not be completely resolved.

In addition, Japanese Unexamined Patent Publication No. 1994-124713, which is a prior art, discloses a technology that vapor-deposits a solvent onto a general PEO (polyethylene oxide) polymer. In this case, there was a problem that the internal structure of the polymer was collapsed due to the lack of crosslinking structure and the ionic conductivity could not be ensured.

Thus, the present inventors have applied a method in which a polar compound derived from a polar solvent is vapor-deposited onto a polymer solid electrolyte which contains a polymer crosslinked with a PEO (polyethylene oxide)-based copolymer modified with a crosslinkable functional group. The polymer solid electrolyteof one embodiment prepared in this way comprises a polymer containing a PEO (polyethylene oxide)-based copolymer containing a crosslinkable functional group; and a polar compound, wherein at least a part of the crosslinkable functional groups form a crosslinking bond with each other, so that the polymer forms a three-dimensional network structure, and wherein the polar compound in a gaseous state is contained in the three-dimensional network structure or can represent a structure bonded on a polymeric chain.

It was confirmed that this polymer solid electrolyte exhibits improved ionic conductivity even while containing a trace amount of a polar compound derived from a polar solvent in a gaseous state. This is predicted to be because the polar compound in a gaseous state affect the physical properties such as crystallinity of the PEO-based copolymer, and increases the chain mobility of the polymer chain, thereby improving the conductivity of lithium ions contained in the polymer solid electrolyte.

Accordingly, the polymer solid electrolyte of one embodiment exhibits improved ionic conductivity without substantially containing a polar solvent or electrolyte in a liquid state, and can greatly contribute to the development of an all-solid-state battery having excellent physical properties.

Next, a polymer solid electrolyte and the like according to a specific embodiment of the disclosure will be described in detail.

## Polymer solid electrolyte

As described above, a polymer solid electrolyte of one embodiment comprises: a polymer containing PEO(polyethylene oxide)-based copolymer containing a crosslinkable functional group; and a polar compound, wherein at least a part of the crosslinkable functional group forms a crosslinking bond with each other, so that the polymer forms a three-dimensional network structure, and wherein the polar compound is contained in the three-dimensional network structure in a gaseous state or is bonded onto the polymer chain.

In one specific embodiment, the polar compound in a gaseous state may be dispersed between polymer chains forming a three-dimensional network structure, or may have a shape adsorbed or bonded to the surface or interior of the polymer chain.

This polymer solid electrolyte contains a trace amount of a polar compound contained or bonded in a gaseous state by vapor deposition, which will be described later. This polymer solid electrolyte can be confirmed from the fact that no liquid components are observed on the surface of the electrolyte layer, for example, when the electrolyte layer containing the same is separated from the all-solid-state battery and the like, and then observed with the naked eye, an electron microscope or the like. Unlike the same, when a polar solvent or electrolyte in a liquid state is injected into the polymer solid electrolyte, a liquid component or a component showing wettability can be observed on the surface of the electrolyte layer. In addition, the polymer solid electrolyte in which the polar compound is vapor-deposited and contained in a gaseous state exhibits significantly higher ionic conductivity than when a polar solvent or electrolyte in a liquid state is injected. Even through such comparison of ionic conductivity, and the like, a polymer solid electrolyte in which the polar compound is vapor-deposited and contained in a gaseous state can be confirmed.

In addition, the polymer solid electrolyte of one embodiment satisfies the characteristics according to the following Equation 1:

<Equation 1>

$$\frac{t_R}{t_D} > 10$$

wherein, in Equation 1,

$t_R$ is the relaxation time of the polymer chain,
$t_D$ is the diffusion time of the polar compound within the polymer chain, and is defined by the following Equation 2,

<Equation 2>

$$t_D = \frac{L^2}{2D}$$

wherein, in Equation 2,

D is the diffusion coefficient of the polar compound within the polymer chain, which is $10^{-9}$ to $10^{-6}$ $cm^2/s$, and L is the thickness of the polymer solid electrolyte, which is 5 to 500 $\mu$m.

Such an Equation 1 is derived based on the fact that in the polymer solid electrolyte of one embodiment, the polar compound and the behavior of the polymer resulting therefrom are related to the improvement of the ionic conductivity of the polymer solid electrolyte.

Specifically, Equation 1 defines the correlation between the relaxation time ($t_R$) of the polymer chain, e.g., the PEO-based copolymer and the diffusion time ($t_D$) of the polar compound within the polymer chain. Satisfying the above Equation 1 indicates that as the relaxation time of polymers becomes relatively large, the mobility of the polar compound due to a gaseous state increases, and the diffusion time becomes shorter, and confirms that the ionic conductivity of the polymer solid electrolyte can be significantly improved by satisfying the corresponding characteristics as shown in Examples described later.

For example, as the relaxation time ($t_R$) of the polymer chain becomes slower, the mobility of the polymer chain becomes greater, which means that the mobility of the polymer chain is improved. Thus, as the relaxation time ($t_R$) of the polymer chain becomes slower and its value is larger, it may be advantageous to improve the ionic conductivity. Further, as the diffusion time ($t_D$) of the polar compound within the polymer chain becomes shorter, the effect of improving ionic conductivity may further appear.

Therefore, when the relaxation time ($t_R$) of the polymer chain and the diffusion time ($t_D$) of the polar compound within the polymer chain satisfy the range defined in Equation 1, the ionic conductivity of the polymer solid electrolyte can also be further improved. The relaxation time may be 12 hours or more and 120 hours or less.

Such characteristics of Equation 1 are first achieved by the polymer solid electrolyte of one embodiment, which is prepared by the vapor deposition of a polar solvent (polar compound), and the vapor-deposited polar compound improves the mobility of the polymer chain, while it can be assumed that the characteristics are achieved as such a polar compound is contained in a gaseous state and its own diffusion time becomes shorter.

For example, in a case where Equation 1 is satisfied, when the polar compound in a gaseous state is adsorbed to the polymer and then diffused, it exhibits Fickian diffusion behavior. Due to Fickian diffusion behavior, the polar solvent diffuses inside the polymer to thereby form a uniform concentration profile. Accordingly, it is possible to adjust so that a trace amount of a polar compound in a gaseous state is included on the surface or inside of the polymer chain, thereby improving only the mobility of the polymer chain without deforming the internal structure of the polymer. Therefore, the ionic conductivity of the polymer solid electrolyte can be improved.

On the other hand, if it is out of the range of Equation 1, it can be assumed that the polar solvent are injected in a liquid state, and exhibits Non-Fickian Diffusion behavior. Due to non-Fickian diffusion behavior, the polar solvent is rapidly absorbed into the polymer, so that gelation can proceed on the polymer surface. Due to non-uniform concentration distribution inside the polymer, the polymer chain mobility decreases, so that the effect of increasing the ionic conductivity of the polymer solid electrolyte may not be significant.

Based on the above-mentioned principle, a polymer solid electrolyte that satisfies the characteristics of Equation 1 can exhibit improved ionic conductivity, and by satisfying Equation 1, it can be indirectly confirmed that the polymer solid electrolyte contains a vapor-deposited polar compound in a gaseous state.

Meanwhile, in the relational expression of Equation 1 described above, the $t_R$ refers to the relaxation time of the polymer chain, which is the time required until the point of time at which the polymer chain is deformed by the vapor deposition of the polar solvent (polar compound) and then restored to equilibrium or normal state. In general, the relaxation time may refer to the time required for a polymer system in equilibrium to reach another equilibrium state after being converted to a non-equilibrium state by external perturbation. For example, one illustrative method and conditions for measuring the relaxation time are described in 『Tapabrata Dam, et al., "The ionic transport mechanism and coupling between the ion conduction and segmental relaxation processes of PEO20-LiCF3SO3 based ion conducting polymer clay composites", Phys. Chem. Chem. Phys 18, 19955-19965 (2016)』

In $t_R$ of Equation 1, the vapor deposition of the polar solvent corresponds to external perturbation, and the ionic conductivity observed from the time point ($t = t_R$) at which the vapor deposition time(t) in Equation 1 is $t_R$ may be a signal

indicating that the polymer system has reached a stable equilibrium state.

The relaxation time may generally vary depending on temperature. The ionic conductivity of the polymer solid electrolyte shows a behavior to increase together as the temperature increases. Therefore, when the vapor deposition process is performed at a high temperature, the increase in ion conductivity may be the result that appears from a combination of temperature and vapor deposition effects. In order to eliminate the coupling effect in the experimental results and accurately grasp the relaxation time of polymer chains induced by the vapor deposition, the vapor deposition process may be performed at room temperature.

$t_D$ is the diffusion time of the polar compound within the polymer chain, which is the time required for the polar compound having a constant diffusion coefficient to diffuse into the polymer having a certain thickness. **The** polymer may be in the form of a polymer film.

**In** Equation 2, D is the diffusion coefficient of the polar compound within the polymer chain, which may be $10^{-9}$ to $10^{-6}$ $cm^2/s$. **If** the D is less than $10^{-9}$ $cm^2/s$, the diffusion of the polar compound inside the polymer chain is too slow, which may make the vapor deposition process difficult. **If** D is greater than $10^{-6}$ $cm^2/s$, the rate at which polar compound diffuses and evaporates increases, thereby promoting gelation of the polymer. **The** D can be used as a fitting parameter.

The D can be calculated from the following Equation 3.

<Equation 3>

$$\frac{M(t)}{M_\infty} = 1 - \frac{8}{\pi^2}\sum_{n=0}^{\infty}\frac{1}{(2n+1)^2}exp\left[-\frac{D(2n+1)^2\pi^2 t}{L}\right]$$

The M(t) is the amount of evaporation of the polar compound contained in the polymer solid electrolyte over time, the $M_\infty$ is the maximum value or saturation value of the polar compound that can be contained in the polymer solid electrolyte, and is 0.005 to 0.5, and the L is, for example, the thickness of the film-like polymer solid electrolyte, which is 5 $\mu$m to 500 $\mu$m, and the t refers to the time at which the liquid phase evaporation rate is measured.

After measuring the M(t), the fitting parameter D can be obtained when fitting Equation 3.

L is, for example, the thickness of the polymer solid electrolyte obtained in a film state, and may be 5 to 500 $\mu$m. If the L is less than 5 $\mu$m, the mechanical strength of the polymer solid electrolyte may decrease due to swelling caused by the polar compound, which may be difficult to handle or may be destroyed. If the L is greater than 500 $\mu$m, the thickness increases and thus may act as resistance within the battery, which may lead to a decrease in battery performance. The method or device for measuring the L is not particularly limited as long as it is a means that can measure the thickness of an object. For example, the L can be measured using a general micrometer, or can be measured by analyzing a cross section with a SEM (scanning electron microscope).

Meanwhile, in the polymer solid electrolyte of one embodiment, the crosslinkable functional group may be directly bonded to the main chain, etc. of the PEO-based copolymer, but may bonded through an alkylene linker or alkylene oxide linker. In this regard, the crosslinkable functional group may be bonded through an alkylene linker or alkylene oxide linker having 0 to 10 carbon atoms (provided that an alkylene linker having 0 carbon atoms represents a single bond), and may be at least one selected from the group consisting of a hydroxyl group, a carboxyl group, an isocyanate group, a nitro group, a cyano group, an amine group, an amide group, an epoxy group and an allyl group.

In one embodiment of the disclosure, the crosslinkable functional group may be composed of two or more types. The crosslinkable functional groups may be the same or different from each other, and preferably may be different. When the crosslinkable functional groups are different, multiple types of repeating units each containing these functional groups may be included. Further, when multiple types of crosslinkable functional groups are included, it may become easier to control the mobility and ionic conductivity of the polymer chain.

The crosslinkable functional group refers to a functional group capable of forming a crosslinking bond between crosslinkable functional groups and/or a crosslinking bond with each other through a crosslinking agent, and can be bonded to the main chain of the polymer chain in the form of a side chain.

In a more specific example, the PEO-based copolymer containing a crosslinkable functional group may be a copolymer containing repeating units of the following Chemical Formulas 1 to 3:

[Chemical Formula 1]

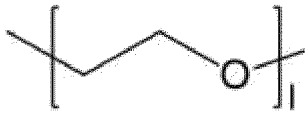

[Chemical Formula 2]

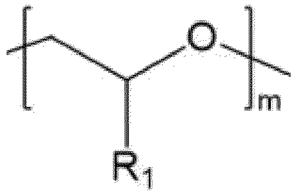

[Chemical Formula 3]

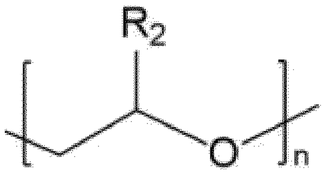

wherein, in Chemical Formulas 1 to 3, $R_1$ represents $-CH_2-O-(CH_2-CH_2-O)_k-R_3$, k is 0 to 20, $R_3$ represents an alkyl group having 1 to 5 carbon atoms,

$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms (provided that an alkylene linker having 0 carbon atoms represents a single bond), and

l, m and n are the number of repetitions of the repeating unit, wherein l and n are each independently an integer of 1 to 1000, and m is an integer of 0 to 1000.

For example, the crosslinkable functional group of $R_2$ can form a polymer having a matrix form of a three-dimensional network structure formed by the crosslinking bond. By forming a three-dimensional network structure by the crosslinking bond, the mechanical properties of the polymer solid electrolyte can be improved, and a polar compound in a gaseous state may be included or bonded within such a three-dimensional network structure to provide a polymer solid electrolyte of one embodiment having improved ionic conductivity.

Further, it is obvious that the PEO-based copolymer may include two or more types of repeating units of Chemical Formula 3 in which the $R_2$ is crosslinkable functional groups different from each other, and may also include one or more types of repeating units of Chemical Formula 2.

When l, m and n are each less than 1, it is difficult to form a polymer because the molecular weight is small, and when l, m and n are each more than 1000, the solubility during preparation of a polymer solution decreases due to an increase in viscosity, and molding for preparing a polymer solid electrolyte may become difficult. In particular, when the number of repetitions of the repeating unit containing the crosslinkable functional group among l, m, and n is more than 1000, the degree of crosslinking is excessively increased, the mobility of the polymer chain may decrease and the ionic conductivity of the polymer solid electrolyte may decrease.

As used herein, "hydroxy group" refers to -OH group.

As used herein, "carboxyl group" refers to -COOH group.

As used herein, "isocyanate group" refers to -N=C=O group.

As used herein, "nitro group" refers to $-NO_2$ group.

As used herein, "cyano group" refers to -CN group.

As used herein, "amide group" refers to -C(=O)N R'R", wherein R' and R" may each independently be hydrogen

or a C1 to C5 alkyl group, or R' and R" together with the N atom to which they are attached may form a heterocycle having C4 to C8 atoms in the ring structure.

As used herein, "amine group" may be selected from the group consisting of a monoalkylamine group; a monoarylamine group; a monoheteroarylamine group; a dialkylamine group; a diarylamine group; a diheteroarylamine group; an alkylarylamine group; an alkylheteroarylamine group; and an arylheteroarylamine group, and the carbon number thereof is not particularly limited, but is preferably 1 to 30. Specific examples of the amine group include a methylamine group, a dimethylamine group, an ethylamine group, a diethylamine group, a phenylamine group, a naphthylamine group, a biphenylamine group, a dibiphenylamine group, an anthracenyl amine group, a 9-methyl-anthracenylamine group, a diphenylamine group, a phenylnaphthylamine group, a ditolylamine group, a phenyltolylamine group, a triphenylamine group, a biphenylnaphthylamine group, a phenylbiphenyl amine group, a biphenylfluorenylamine group, a phenyltriphenylenylamine group, a biphenyltriphenylenylamine group, and the like, but are not limited thereto. Further, "amino group" refers to $-NH_2$.

As used herein, "allyl group" refers to $-CH_2-CH=CH_2$ group.

The weight average molecular weight (Mw) of the copolymer containing Chemical Formulas 1 to 3 may be 100,000 g/mol to 2,000,000 g/mol, and specifically, it may be 100,000 g/mol or more, 200,000 g/mol or more, or 300,000 g/mol or more, and 1,600,000 g/mol or less, 1,800,000 g/mol or less, or 2,000,000 g/mol or less. If the weight average molecular weight (Mw) of the copolymer is less than 100,000 g/mol, the mechanical properties of the polymer solid electrolyte to be prepared may not be satisfied. If the weight average molecular weight (Mw) of the copolymer is more than 2,000,000 g/mol, the solubility during preparation of the polymer solution decreases due to an increase in viscosity, and molding for preparing the polymer solid electrolyte may become difficult. Further, the ionic conductivity of the polymer solid electrolyte may decrease due to an increase in crystallinity and a decrease in chain mobility inside the polymer solid electrolyte.

In particular, when the number of repetitions of the repeating unit of Chemical Formula 3 containing a crosslinkable functional group among l, m, and n is more than 1000, the degree of crosslinking increases excessively, and the mobility of polymer chains decreases, which may lead to a decrease in the ionic conductivity of the polymer solid electrolyte.

Further, the copolymer may be a random copolymer or a block copolymer.

**In** a specific embodiment of the disclosure, the polar compound may be contained or bonded to the surface or inside of the polymer chain in a gaseous state. Specifically, the polar compound in a gaseous state may be diffused or dispersed between polymer chains that have formed a three-dimensional network structure by crosslinking, or may be adsorbed or bonded to the surface or inside of the polymer chains.

The polar compound is a gas molecule of a polar solvent used in the vapor deposition process, and may be contained in a form in which gas molecules of the polar solvent are adsorbed to the polymer during vapor deposition, and then are diffused into the polymer chain and bind to the polymer chain, or it may be contained in a dispersed or diffused form in the internal space between polymer chains. The polar compound is either bonded to the polymer chain, or contained in a dispersed form in the internal space between the polymer chains, thereby capable of improving the ionic conductivity of the final prepared polymer solid electrolyte.

Specifically, a polar compound bonded to the polymer chain or contained between the polymer chains can function as a plasticizer and plasticize the polymer. The plasticized polymer may be increased in amorphous region inside, which can improve the mobility of the polymer chain. As the mobility of the polymer chain improves, the ion hopping effect inside the polymer increases, and the ionic conductivity of the polymer solid electrolyte can be improved.

Further, the polar compound can function as an intermediate for smooth ion transfer through ion hopping. Since the affinity between lithium ions and polar compounds is stronger than the affinity between lithium ions and the ether oxygen of PEO-based copolymers, the transfer of lithium ions may be faster and easier within the polymer to which the polar compound is adsorbed. That is, as the polar compound flows in the inside of the polymer, the cation solvation effect of lithium ions increases to improve ion mobility, and thereby, the ionic conductivity of the polymer solid electrolyte can be improved.

Further, the polar compound may include at least one selected from the group consisting of a carbonate-based compound and a sulfonyl-based compound.

Specifically, the polar compound may include at least one selected from the group consisting of ethyl methyl carbonate(EMC), dimethyl carbonate(DMC), diethyl carbonate(DEC), ethylene carbonate(EC), propylene carbonate(PC), vinylene carbonate(VC) and sulfolane, or may include a combination thereof.

The content of the polar compound may include 0.1% by weight or more and less than 10% by weight, based on the total weight of the polymer solid electrolyte. For example, the content of the polar compound may be 0.1 % by weight or more, 1% by weight or more, and 2% by weight or less, or 5% by weight or less, 6% by weight or less, 7% by weight or less, 8% by weight or less, or 9% by weight or less, or less than 10% by weight. When the content of the polar compound is less than 0.1% by weight, it is difficult to induce a change in the chain conformation inside the polymer, and thus, the ionic conductivity of the polymer solid electrolyte is not improved. When the content of the polar compound is 10% by weight or

more, the polymer solid electrolyte has a large liquid content and thus has the properties of a semi-solid battery. Further, the mechanical strength of the polymer solid electrolyte may decrease due to gelation of the polymer.

In one embodiment of the disclosure, the polymer solid electrolyte may include a crosslinking bond between crosslinkable functional groups. **In** addition, the polymer solid electrolyte may further include a crosslinking agent to form a crosslinking bond between the crosslinking agent and the crosslinkable functional group. For example, at least a part of the crosslinkable functional groups may form a crosslinking bond with each other via the crosslinking agent, thereby forming the three-dimensional network structure described above.

The crosslinking bond may be a urethane crosslinked bond, an ester crosslinked bond, a hydrogen bond, a bond formed from a radical polymerization reaction by a vinyl group at the end of an allyl group ($-CH_2-CH=CH_2$), and the like, but is not limited to these examples.

Further, when a crosslinking agent is added in the preparation process of the polymer solid electrolyte, a crosslinking bond between the crosslinking agent and the crosslinkable functional group may be formed. The crosslinking bond may be a hydrogen bond, a bond formed by a Lewis acid-base interaction, an ionic bond, a coordination bond, or a bond formed by radical polymerization.

The crosslinking agent is not particularly limited as long as it is a polyfunctional crosslinking agent that can form a crosslinking bond with the crosslinkable functional group. For example, the crosslinking agent may be one or more polyfunctional crosslinking agents, for example, a bifunctional or higher polyvalent compound, selected from the group consisting of trimethylolpropane trimethacrylate, poly(ethylene glycol) diacrylate, poly(ethylene glycol) dimethacrylate, ethylene glycol dimethylacrylate (hereinafter referred to as "EGDMA"), 1,3-diisopropenylbenzene(DIP), 1,4-diacryloyl piperazine, 2-(diethylamino)ethyl methacrylate, 2,6-bisacryloylamidopyridine, 3-(acryloyloxy)-2-hydroxypropyl methacrylate, 3,5-bis(acryloylamido)benzoic acid, 3-aminopropyltriethoxysilane, 3-isocyanatopropyltriethoxysilane, 3-methylacryloxypropyl trimethoxysilane, bis-(1-(tert-butylperoxy)-1-methylethyl)-benzene, dicumyl peroxide, dimethacrylate, divinylbenzene, ethylene glycol maleic rosinate acrylate, glycidylmethacrylate, hydroxyquinoline, i-phenyldiethoxysilane, maleic rosin glycol acrylate, methylene bisacrylamide, N,N'-1,4-phenylenediacrylamine, N,O-bisacryloyl-phenylalaninol, N,O-bismethacryloyl ethanolamine, pentaerythritol triacrylate, phenyltrimethoxy silane, tetramethoxysilane, tetramethylene, tetraethoxysilane, and triallyl isocyanurate.

Further, the crosslinking agent may be included in an amount of 1 to 30 parts by weight based on 100 parts by weight of the PEO-based copolymer containing a crosslinkable functional group. If the content of the crosslinking agent is less than 1 part by weight, crosslinking with the crosslinkable functional group may not be sufficiently achieved, and if the content of the crosslinking agent is more than 30 parts by weight, excessive crosslinking may occur and the mobility of the polymer chain decreases, which may lead to a decrease in ionic conductivity.

In one embodiment of the disclosure, the polymer solid electrolyte may further include lithium salt. The lithium salt is contained in a dissociated ionic state in the internal space between the polymer chains, and thus, can improve the ionic conductivity of the polymer solid electrolyte. At least a part of the cations and/or anions dissociated from the lithium salt exist in a state bonded to the polymer chain, and may exhibit mobility during charge/discharge of the battery.

The lithium salt may include at least one selected from the group consisting of $(CF_3SO_2)_2NLi$(lithium bis(trifluoromethanesulphonyl)imide, LiTFSI), $(FSO_2)_2NLi$(lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, lithium chloroborane, a lower aliphatic lithium carboxylate and lithium tetraphenylborate.

Further, the lithium salt may be included in an amount of 25 to 45 parts by weight based on 100 parts by weight of the PEO-based copolymer containing the crosslinkable functional group. Specifically, it may be included in an amount of 25 parts by weight or more, 30 parts by weight or more, or 35 parts by weight or more, or 40 parts by weight or less, or 45 parts by weight or less. If the content of the lithium salt is less than 25 parts by weight, the ionic conductivity of the polymer solid electrolyte may decrease, and if the content of the lithium salt exceeds 45 parts by weight, the mechanical strength may decrease.

Meanwhile, the polymer solid electrolyte of one embodiment as described above may further include a ceramic compound dispersed within the three-dimensional network structure of the polymer. The ceramic compound has a lithium ion transfer ability to improve the conductivity of lithium ions, and preferably contains lithium atoms but does not store lithium, and has the function of transporting lithium ions, and can improve the ionic conductivity of the polymer solid electrolyte.

Further, the ceramic compound may be included in a uniformly dispersed state between crosslinked polymer chains, for example, within the three-dimensional network structure. The ceramic compound is added together in the crosslinking process, and can be uniformly dispersed without aggregation between the polymer chains formed by crosslinking. Such a ceramic compound can be advantageous in improving the mechanical strength and ionic conductivity of the composite solid electrolyte due to its uniform dispersion form.

Further, the ceramic compound may be in the form of particles. Due to the morphological characteristics of particles, they can be contained in a more uniformly dispersed state within the polymer solid electrolyte. The particles of the ceramic compound may be spherical, and its diameter may be 100 nm to 1000 nm. **If** the diameter is less than 100 nm, the

effect of non-crystallization due to the decrease in crystallinity of the polymer may be slight, and if the diameter is more than 1000 nm, dispersibility may decrease due to an increase of aggregation between particles, which may make it difficult to disperse uniformly.

The ceramic compound may be an oxide-based or phosphate-based compound, for example, an oxide-based solid electrolyte in the form of lithium metal oxide or lithium metal phosphate. More specifically, the ceramic compound may be at least one selected from the group consisting of garnet-type lithium-lanthanum-zirconium oxide(LLZO, $Li_7La_3Zr_2O_{12}$)-based compound, perovskite-type lithium-lanthanum-titanium oxide(LLTO, $Li_3xLa_{2/3-x}TiO_3$)-based compound, phosphate-based NASICON type lithium-aluminum-titanium phosphate(LATP, $Li_{1+x}Al_xTi_{2-x}(PO_4)_3$)-baSed compound, lithium-aluminum-germanium phosphate(LAGP, $Li_{1.5}Al_{0.5}Ge_{1.5}(PO_4)_3$)-based compound, lithium-silicon-titanium phosphate(LSTP, $LiSiO_2TiO_2(PO_4)_3$)-based compound, and lithium-lanthanum-zirconium-titanium oxide (LLZTO)-based compound. More preferably, at least one oxide-based solid electrolyte selected from the group consisting of lithium-lanthanum-zirconium oxide(LLZO), lithium-silicon-titanium phosphate(LSTP), lithium-lanthanum-titanium oxide(LLTO), lithium-aluminum-titanium phosphate(LATP), lithium-aluminum-germanium phosphate(LAGP), and lithium-lanthanum-zirconium-titanium oxide(LLZTO) may be used.

The oxide-based or phosphate-based oxide-based solid electrolyte generally has an ionic conductivity value of up to $10^{-4}$ ~ $10^{-3}$ S/cm at room temperature, and has the advantage of being stable in a high voltage region, being stable in air, and thus being easy to synthesize and handle. Therefore, the above-described polymer solid electrolyte further includes the ceramic compound and thus can make up for the drawbacks of the remaining polymer components.

Further, the ceramic compound does not easily cause combustion or ignition phenomenon even under high temperature conditions of 400°C or more, and thus is high in high-temperature stability. Therefore, when the composite solid electrolyte contains a ceramic compound, not only the mechanical strength but also the high temperature stability and ionic conductivity of the polymer solid electrolyte can be improved.

The ceramic compound may be included in an amount of 10 parts by weight to 100 parts by weight, or 10 parts by weight to 60 parts by weight, based on 100 parts by weight of the PEO-based copolymer containing a crosslinkable functional group.

If the ceramic compound is included in an excessively small amount, the effect of lowering the crystallinity of the polymer and making it amorphous due to the ceramic compound is reduced, so that the effect of increasing the ionic conductivity of the polymer solid electrolyte is not significant, and the mechanical properties may also not meet the expected level due to the formation of the composite.

If the ceramic compound is included in an excessively large amount, the ceramic compound is not uniformly dispersed within the polymer, and a phenomenon occurs where the ceramic compound particles clump and aggregate with each other, so that a polymer solid electrolyte with reduced ionic conductivity can be prepared.

**Method for preparing polymer solid electrolyte**

A method for preparing the above-mentioned polymer solid electrolyte may comprise the steps of: (S1) preparing a polymer in which a PEO(polyethylene oxide)-based copolymer containing a crosslinkable functional group is crosslinked; and (S2) vapor-depositing a polar solvent onto the polymer prepared in step (S1).

The description regarding the polymer in which a PEO(polyethylene oxide)-based copolymer containing a crosslinkable functional group is crosslinked is the same as those set forth above.

Next, the preparation method will be described in more detail for each step.

In step (S1), the polymer crosslinked with a PEO (polyethylene oxide)-based copolymer containing a crosslinkable functional group can be prepared.

The crosslinking reaction in step (S1) may proceed in the presence of at least one additive selected from the group consisting of a crosslinking agent and an initiator.

Further, in order to form a polymer solid electrolyte, a lithium salt may be added together during the crosslinking reaction step (S1) or in a previous step thereof, and a ceramic compound may be further added.

The crosslinking bond may be formed in the process of coating a polymer solution containing the PEO-based copolymer onto a substrate to form a coating film, and then drying the coating film.

Specifically, the polymer solution can be prepared by mixing the PEO-based copolymer in a solvent, and additionally, the solution can be prepared by mixing a crosslinking agent, an initiator, and/or a lithium salt together.

The solvent is not particularly limited as long as it is a solvent that can be mixed with the PEO-based copolymer, the crosslinking agent, the initiator and/or the lithium salt, and can be easily removed by a drying process. For example, the solvent may be acetonitrile, methanol, ethanol, tetrahydrofuran, water, isopropyl alcohol, dimethyl sulfoxide(DMSO), N-methyl-2-pyrrolidone(NMP), N,N-dimethyl formamide(DMF) or the like. Such a solvent is a solvent that serves as a reaction medium for forming a crosslinking bond, and is distinguished from polar solvents contained in liquid electrolytes, and the like, and is completely removed by drying or the like after crosslinking.

The concentration of the polymer solution can be appropriately adjusted in consideration of the extent to which the

molding process for preparing the polymer solid electrolyte can proceed smoothly. Specifically, the concentration of the polymer solution may mean the concentration (w/w%) of the polymer in the polymer solution. The concentration of the polymer may be the concentration of the PEO-based copolymer. For example, the concentration of the polymer solution may be 5% by weight to 20% by weight, and specifically, it may be 5% by weight or more, 7% by weight or more, or 9% by weight or more, and 13% by weight or less, 17% by weight or less, or 20% by weight or less. If the concentration of the polymer solution is less than 5% by weight, the concentration may be too diluted, and the mechanical strength of the polymer solid electrolyte may decrease, or it may flow down when coated onto a substrate. If the concentration of the polymer solution is more than 20% by weight, it will be difficult to dissolve the lithium salt at the desired concentration in the polymer solution, the viscosity will be high, and the solubility will be low, which makes it difficult to coat the lithium salt in the form of a uniform thin film.

The substrate is not particularly limited as long as it can function as a support for the coating film. For example, the substrate may SUS (stainless use steel), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-ethyl acrylate copolymer film, ethylene-methyl acrylate copolymer film or polyimide film.

Further, the coating method is not particularly limited as long as it can form a coating film by coating the polymer solution onto the substrate. For example, the coating method may be bar coating, roll coating, spin coating, slit coating, die coating, blade coating, comma coating, slotdie coating, lip coating, spray coating or solution casting.

The coating film formed on the substrate by the coating method as above can be molded into a film-type polymer from which the residual solvent is completely removed through a drying process. The drying can be performed separately into a primary drying process and a secondary drying process in order to prevent shrinkage of the polymer due to rapid evaporation of the solvent. The first drying process can remove part of the solvent through room temperature drying, and the secondary drying process can completely remove the solvent through vacuum high-temperature drying. The high-temperature drying may be performed at a temperature of 80°C to 130°C. If the high-temperature drying temperature is less than 80°C, the residual solvent cannot be completely removed, and if the high-temperature drying temperature is more than 130°C, the polymer shrinks which may make it difficult to form a uniform electrolyte membrane.

Further, the crosslinking agent may form a bond with the crosslinkable functional group. The details regarding the type of the crosslinking agent, the content of the crosslinking agent, and the type of bond with the crosslinkable functional group are the same as set forth above.

Further, the initiator may induce a radical polymerization reaction between the crosslinkable functional groups to form a crosslinking bond between the crosslinkable functional groups. The functional group that enables radical polymerization reaction may be a functional group containing vinyl at the end, for example, an allyl group.

The initiator is not particularly limited as long as it is an initiator that can induce a radical polymerization reaction between the crosslinkable functional groups. For example, the initiator may include at least one selected from the group consisting of benzoyl peroxide, azobisisobutyronitrile, lauroyl peroxide, cumene hydroperoxide, diisopropylphenyl-hydroperoxide, tert-butyl hydroperoxide, p-methane hydroperoxide and 2,2'-azobis(2-methylpropionitrile).

The initiator may be used in an amount of 0.5 to 2 parts by weight based on 100 parts by weight of the PEO-based copolymer containing a crosslinkable functional group. When the initiator is used within the above range, it can make it possible to induce a radical polymerization reaction between crosslinkable functional groups and efficiently form a crosslinking bond.

Further, the details regarding the content and type of the lithium salt is the same as set forth above.

Furthermore, the above-mentioned oxide-based solid electrolyte can also be used as the ceramic compound, and the content thereof is also the same as set forth above.

In step (S2), a polar solvent can be vapor-deposited on the polymer prepared in step (S1) to prepare the polymer solid electrolyte of one embodiment. At this time, the gas molecule of the polar solvent may be a polar compound included in one embodiment.

The vapor deposition may be performed by contacting the polymer with vapor of the polar solvent generated at room temperature or by heating and penetrating into the polymer. The polar compound in a gaseous state is uniformly diffused on the surface and/or inside of the polymer by placing it at room temperature or by vapor deposition through heating in this way. Thereby, the polar compound gas molecules may be bonded to the polymer chain, or may be included in a uniformly dispersed or diffused form in the internal space of the polymer chain.

If the polar solvent is placed at room temperature during the vapor deposition, a trace amount of a polar solvent with a low boiling point can be slowly vaporized at room temperature and penetrate into the inside of the polymer, thereby effectively inducing a change in the conformation of the polymer chains crosslinked within the polymer.

Further, when a polar solvent is heated during vapor deposition, the vapor deposition rate can be improved. At this time, the heating temperature is not particularly limited as long as it is a temperature at which the polar solvent can undergo a phase change to vapor, and may be, for example, 30°C to 80°C. General PEO is melted at 60°C, but when a PEO-based copolymer modified with the crosslinkable functional group forms a crosslinked structure, it is improved in heat

resistance and can withstand up to 80°C, thereby further increasing a vapor deposition rate. Further, the heating method is not limited as long as it is a method that can supply energy to generate steam. For example, a direct heating method using a burner or stove, or an indirect heating method using a heater or steam pipe, etc. can be used, but the method is not limited only to these examples.

During the heating, if the temperature is too high, there are the drawbacks that the solvent may boil at a temperature higher than the boiling point of the polar solvent, a structural change in the solvent may occur, or deformation of the polymer may be induced, and it is difficult to control the evaporation rate of the polar solvent during vapor deposition. Thus, in order to vapor deposit with a trace amount of polar solvent, it may be preferable to perform vapor deposition at a heating temperature in the appropriate range as specified above.

## All-solid-state battery

A further embodiment of the disclosure also relates to an all-solid-state battery comprising the above polymer solid electrolyte, wherein the all-solid-state battery includes a negative electrode, a positive electrode, and a polymer solid electrolyte interposed between the negative electrode and the positive electrode, and the polymer solid electrolyte is prepared according to one embodiment as mentioned above.

Specifically, the polymer solid electrolyte includes a polymer crosslinked with a PEO (polyethylene oxide)-based copolymer containing a crosslinkable functional group, a polar compound in a gaseous state and optionally a ceramic compound, wherein the polar compound in a gaseous state is included or bonded, thereby improving the ionic conductivity, which can be suitable as an electrolyte for an all-solid-state battery.

Meanwhile, the positive electrode included in the all-solid-state battery includes a positive electrode active material layer, wherein the positive electrode active material layer may be formed on one surface of the positive electrode current collector.

The positive electrode active material layer includes a positive electrode active material, a binder, and a conductive material.

Further, the positive electrode active material is not particularly limited as long as it is a material capable of reversibly absorbing and desorbing lithium ions, and examples thereof may be a layered compound, such as lithium cobalt oxide, lithium nickel oxide,Li[NixCoyMnzMv]$O_2$ (where M is any one selected from the group consisting of Al, Ga, and In, or two or more elements thereof; and 0.3≤x<1.0, 0≤y, z≤0.5, 0≤v≤0.1, and x+y+z+v=1), Li(LiaMb-a-b'M'b')$O_{2-c}A_c$ (where 0≤a≤0.2, 0.6≤b≤1, 0≤b'≤0.2, and 0≤c≤0.2; M includes Mn and at least one selected from the group consisting of Ni, Co, Fe, Cr, V, Cu, Zn, and Ti; M' is at least one selected from the group consisting of Al, Mg, and B; and A is at least one selected from the group consisting of P, F, S, and N), or a compound substituted with at least one transition metal; lithium manganese oxides such as the chemical formula $Li_{1+y}Mn_{2-y}O_4$ (where y ranges from 0 to 0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni-site type lithium nickel oxide expressed by the chemical formula $LiNi_{1-y}MyO_2$ (where M is Co, Mn, Al, Cu, Fe, Mg, B, or Ga, and y ranges from 0.01 to 0.3); lithium manganese complex oxide expressed by the chemical formula $LiMn_{2-y}M_yO_2$ (where M is Co, Ni, Fe, Cr, Zn, or Ta, and y ranges from 0.01 to 0.1) or $Li_2Mn_3MO_8$ (where M is Fe, Co, Ni, Cu, or Zn); $LiMn_2O_4$ having a part of Li being substituted with alkaline earth metal ions; a disulfide compound; $Fe_2(MoO_4)_3$, and the like, but are not limited thereto.

Further, the positive electrode active material may be included in an amount of 40 to 80% by weight based on the total weight of the positive electrode active material layer. Specifically, the content of the positive electrode active material may be 40% by weight or more or 50% by weight or more, and 70% by weight or less or 80% by weight or less. If the content of the positive electrode active material is less than 40% by weight, the connectivity and electrical properties between positive electrode active materials may be insufficient, and if the content of the positive electrode active material is more than 80% by weight, the mass transfer resistance may increase.

Further, the binder is a component assisting in binding between the positive electrode active material and the conductive material, and in binding with the current collector. **The** binder may include at least one selected from the group consisting of styrene-butadiene rubber, acrylatedstyrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepicchlorohydrin, polyphosphazene,polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene. Preferably, the binder may include at least one selected from the group consisting of styrene-butadiene rubber, polytetrafluoroethylene, carboxymethylcellulose, polyacrylic acid, lithium polyacrylate and polyvinylidene fluoride.

Further, the binder may be included in an amount of 1% by weight to 30% by weight based on the total weight of

the positive electrode active material layer. Specifically, the content of the binder may be 1% by weight or more or 3% by weight or more, and 15% by weight or less or 30% by weight or less. If the content of the binder is less than 1% by weight, the adhesion between the positive electrode active material and the positive electrode current collector may decrease, and if the content of the binder is more than 30% by weight, the adhesion is improved, but the content of the positive electrode active material is reduced accordingly, which may lower battery capacity.

Further, the conductive material is not particularly limited as long as it prevents side reactions in the internal environment of the all-solid-state battery and does not cause chemical changes in the battery but has excellent electrical conductivity. The conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The conductive material may typically be included in an amount of 0.5% to 30% by weight based on the total weight of the positive electrode active material layer. Specifically, the content of the conductive material may be 0.5% by weight or more or 1% by weight or more, and 20% by weight or less, or 30% by weight or less. If the content of the conductive material is too low, that is, less than 0.5% by weight, it is difficult to obtain the effect of improving the electrical conductivity, or the electrochemical characteristics of the battery may be deteriorated. If the content of the conductive material is too high, that is, more than 30% by weight, the amount of positive electrode active material is relatively small and thus capacity and energy density may be lowered. The method of incorporating the conductive material into the positive electrode is not particularly limited, and conventional methods known in the related art such as coating on the positive electrode active material can be used.

Further, the positive electrode current collector supports the positive electrode active material layer and plays the role of transmitting electrons between the external conductor wire and the positive electrode active material layer.

The positive electrode current collector is not particularly limited so long as it does not cause chemical changes in the all-solid-state battery and has high conductivity. For example, the positive electrode current collector may be made of copper, stainless steel, aluminum, nickel, titanium, palladium, fired carbon, copper or stainless steel that is surface-treated with one of carbon, nickel, titanium, silver, or the like, an aluminum-cadmium alloy, or the like.

The positive electrode current collector may have a fine protrusion and depression structure on its surface or may adopt a three-dimensional porous structure in order to improve bonding strength with the positive electrode active material layer. Thereby, the positive electrode current collector may be used in any of various forms including a film, a sheet, a foil, a mesh, a net, a porous body, a foaming body, and a non-woven fabric structure.

The positive electrode as described above can be prepared according to conventional methods. Specifically, the positive electrode can be prepared by a process in which a composition for forming a positive electrode active material layer, which is prepared by mixing a positive electrode active material, a conductive material, and a binder in an organic solvent, is coated and dried on a positive electrode current collector, and optionally, compression molding is performed on the current collector to improve the electrode density. At this time, as the organic solvent, a solvent that can uniformly disperse the positive electrode active material, binder, and conductive material, and that evaporates easily, is preferably used. Specifically, acetonitrile, methanol, ethanol, tetrahydrofuran, water, isopropyl alcohol, dimethyl sulfoxide(DMSO), N-methyl-2-pyrrolidone(NMP), and the like can be mentioned.

On the other hand, the negative electrode contained in the all-solid-state battery includes a negative electrode active material layer, and the negative electrode active material layer may be formed on one surface of the negative electrode current collector.

The negative electrode active material may include a material capable of reversible intercalation and deintercalation of lithium ($Li^+$), a material that can react with lithium ions to reversibly form a lithium-containing compound, lithium metal or lithium alloy.

The material capable of reversible intercalation and deintercalation of lithium ion ($Li^+$) may be, for example, a crystalline carbon, an amorphous carbon, or a mixture thereof. The material that can react with lithium ions ($Li^+$) to reversibly form a lithium-containing compound may be, for example, tin oxide, titanium nitrate, or silicon. The lithium alloy may be, for example, an alloy of lithium(Li) and a metal selected from the group consisting of sodium(Na), potassium(K), rubidium(Rb), cesium(Cs), francium(Fr), beryllium(Be), magnesium(Mg), calcium(Ca), strontium (Sr), barium (Ba), radium(Ra), aluminum(Al) and tin(Sn).

Preferably, the negative electrode active material may be lithium metal, and specifically, may be in the form of a lithium metal thin film or lithium metal powder.

The negative electrode active material may be included in an amount of 40 to 80% by weight based on the total weight of the negative electrode active material layer. Specifically, the content of the negative electrode active material may be 40% by weight or more or 50% by weight or more, and 70% by weight or less or 80% by weight or less. If the content

of the negative electrode active material is less than 40% by weight, the electrical characteristics may be not sufficient, and if the content of the negative electrode active material is more than 80% by weight, the mass transfer resistance may increase.

Further, the binder is the same as described above for the positive electrode active material layer.

Further, the conductive material is the same as described above for the positive electrode active material layer.

Further, the negative electrode current collector is not particularly limited so long as it does not cause chemical changes in the corresponding battery and has conductivity. For example, the negative electrode current collector may be made of copper, stainless steel, aluminum, nickel, titanium, fired carbon, copper or stainless steel that is surface-treated with one of carbon, nickel, titanium, silver, or the like, an aluminum-cadmium alloy, or the like. Further, similar to the positive electrode current collector, the negative electrode current collector may be used in various forms such as a film, a sheet, a foil, a net, a porous body, a foaming body, and a non-woven fabric structure, which fine protrusions and depressions are formed on a surface thereof.

The preparation method of the negative electrode is not particularly limited, and it can be prepared by forming a negative electrode active material layer on a negative electrode current collector using a layer or film forming method commonly used in the art. For example, methods such as compression, coating, and deposition can be used. Further, the negative electrode of the present disclosure also includes a case in which a battery is assembled in a state where a lithium thin film does not exist on the negative electrode current collector, and then a metallic lithium thin film is formed on a metal plate through initial charging.

Meanwhile, according to still another embodiment, there are provided a battery module including the all-solid state battery as a unit cell, a battery pack including the battery module, and a device including the battery pack as a power source.

Herein, particular examples of the device may include, but are not limited to: power tools driven by an electric motor; electric cars, including electric vehicles(EV), hybrid electric vehicles(HEV), plug-in hybrid electric vehicles(PHEV), or the like; electric carts, including electric bikes (E-bikes) and electric scooters (E-scooters); electric golf carts; electric power storage systems; or the like.

Preferred examples will be presented hereinafter so that the present disclosure can be understood with ease. However, the following examples are for illustrative purposes only and the scope of the invention is not limited thereto.

## EXAMPLE

### Example 1: Preparation of polymer solid electrolyte

Step 1) Preparation of polymer containing copolymer

A polyethylene oxide (PEO)-based copolymer of the following Chemical Formula 1a was prepared:

[Chemical Formula 1a]

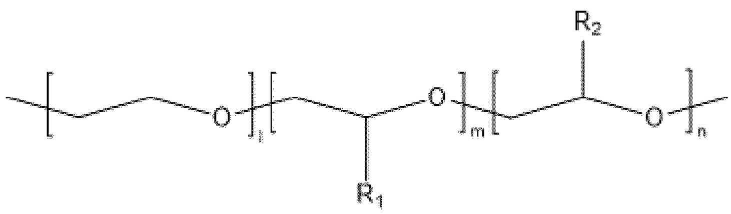

wherein, in Chemical Formula 1a, $R_1$ is $-CH_2-O-(CH_2-CH_2-O)_k-CH_3$, $R_2$ is $-CH_2-O-CH_2-CH=CH_2$, k is 2, the ratio of l : m : n is 85:13:2, and the weight average molecular weight (Mw) of the copolymer is about 2,000,000 g/mol.The copolymer of Chemical Formula 1a has an allyl group bonded through a methylene oxide linker as a crosslinkable functional group.

The polyethylene oxide copolymer was mixed with acetonitrile as a solvent, trimethylolpropane trimethacrylate as a crosslinking agent, benzoyl peroxide as an initiator, and LiTFSI as a lithium salt were mixed to prepare a polymer solution, which was then stirred using a magnetic bar for 24 hours. At this time, the polymer solution was composed of 20 parts by weight of trimethylolpropane trimethacrylate as a crosslinking agent, 1 part by weight of benzoyl peroxide as an initiator, and 36.5 parts by weight of lithium salt based on 100 parts by weight of polyethylene oxide copolymer, wherein an acetonitrile solvent was used so that the concentration of polyethylene oxide copolymer, which is a polymer contained in the polymer solution, was 10.4 wt.%.

The prepared polymer solution was solution-cast on a coin cell lower substrate, then primarily dried at room temperature for 12 hours, and then secondarily dried at 100°C for 12 hours to induce a crosslinking bond, thereby preparing an electrolyte film with a thickness of 200 $\mu$m.

Step 2) Preparation of polymer solid electrolyte

The polymer was attached to the upper plate of the chamber, the lower part of the chamber was filled with EMC solvent, and then naturally evaporated at room temperature for 72 hours to allow EMC vapor to flow into the polymer attached to the upper part of the chamber. Thereby, a polymer solid electrolyte was prepared.

**Example 2: Preparation of composite solid electrolyte**

A composite solid electrolyte was prepared in the same manner as in Example 1, except that in step 1) of Example 1, based on 100 parts by weight of the polyethylene oxide copolymer, 20 parts by weight of trimethylolpropane trimethacrylate as a crosslinking agent, 1 part by weight of benzoyl peroxide as an initiator, 36 parts by weight of lithium salt, and 40 parts by weight of LSTP as a ceramic compound were mixed to prepare a mixed solution, wherein an acetonitrile solvent was used so that the concentration of the polymer polyethylene oxide copolymer contained in the mixed solution was 11.1 wt.%, and the concentration of the polymer polyethylene oxide copolymer and the ceramic compound was 14.9 wt.%.

**COMPARATIVE EXAMPLE:**

**Comparative Example 1: Polymer solid electrolyte containing modified PEO + large amount of liquid**

A polymer solid electrolyte was prepared in the same manner as in Example 1, except that the EMC solvent (12 wt.%) was directly injected in a liquid state into the polymer solid electrolyte prepared in step 1) of Example 1.

**Comparative Example 2: Composite solid electrolyte containing modified PEO + large amount of liquid**

A composite solid electrolyte was prepared in the same manner as in Example 2, except that the EMC solvent (12 wt.%) was directly injected in a liquid state into the composite solid electrolyte prepared in step 1) of Example 2.

**EXPERIMENTAL EXAMPLE**

**Experimental Example 1: Confirmation of correlation between the behavior of polar solvent and polymer during vapor deposition and the ionic conductivity**

Using the following Equation 1 or 2, the correlation between the behavior of polar solventpolar compound) and polymer during vapor deposition and the ionic conductivity was confirmed.

<Equation 1>

$$\frac{t_R}{t_D} > 10$$

wherein, in Equation 1,

$t_R$ is the relaxation time of the polymer chain,
$t_D$ is the diffusion time of the polar compound within the polymer chain, and is defined by the following Equation 2,

<Equation 2>

$$t_D = \frac{L^2}{2D}$$

wherein, in Equation 2,

D is the diffusion coefficient of the polar compound within the polymer chain, which is $10^{-9}$ to $10^{-6}$ $cm^2/s$, and is calculated according to the following Equation 3, and L is the thickness of the polymer solid electrolyte, which is 5 to 500 $\mu$m.

<Equation 3>

$$\frac{M(t)}{M_\infty} = 1 - \frac{8}{\pi^2}\sum_{n=0}^{\infty}\frac{1}{(2n+1)^2}exp\left[-\frac{D(2n+1)^2\pi^2 t}{L}\right]$$

the M(t) is the amount of evaporation of the polar compound contained in the polymer solid electrolyte over time, the $M\infty$ is the maximum value or saturation value of the polar compound that can be contained in the polymer solid electrolyte, and is 0.005 to 0.5, and the L is, for example, the thickness of the film-like polymer solid electrolyte, which is 5 $\mu$m to 500 $\mu$m, and the t refers to the time at which the liquid phase evaporation rate is measured.

(1) Calculation of $t_R/t_D$value

In Equation 3, the evaporation rate M(t), which means the amount of evaporation of the polar compound over time, was calculated using the weight change rate after measuring the weight before and after the polar compound contained in the polymer solid electrolyte manufactured in the example and the comparative example was evaporated. The calculated polar solvent evaporation rate (M(t)) was applied to Equation 1, and the values of the fitting parameters $M\infty$ and D were derived. Then, the derived D value was applied to Equation 2 to determine the $t_D$ value. The $t_D$ value was applied to Equation 1 to determine the $t_R/t_D$ value.

(2) Measurement of ionic conductivity

The ionic conductivity of the polymer solid electrolyte was calculated according to the following Equation 4.
In order to measure the ionic conductivity of the polymer solid electrolyte prepared in Examples and Comparative Examples, the polymer solid electrolyte was formed on the lower substrate of a coin cell with a size of 1.7671 $cm^2$, and then a coin cell for measuring ionic conductivity was manufactured using SUS as a blocking electrode.
Resistance was measured using an electrochemical impedance spectrometer (EIS, VM3, Bio Logic Science Instrument) at 25°C with an amplitude of 10 mV and a scan range of 1 Hz to 0.1 MHz, and the ionic conductivity of the polymer solid electrolyte was calculated according to Equation 4.

<Equation 4>

$$\sigma_i = \frac{L}{RA}$$

In Equation 4, $\sigma i$ is the ionic conductivity of the polymer solid electrolyte (S/cm), R is the resistance($\Omega$) of the solid electrolyte measured with an electrochemical impedance spectrometer, L is the thickness ($\mu$m)of the polymer solid electrolyte, and A means the area ($cm^2$) of the polymer solid electrolyte. The polymer solid electrolyte sample has L = 200 $\mu$m and A = 1.7671 $cm^2$.
Table 1 below shows the results of calculating the $t_R/t_D$ values and the ionic conductivity values obtained according to Equation 1.

[Table 1]

| | Example 1 | Comparative Example 1 |
|---|---|---|
| Types of solid electrolyte | Polymer solid electrolyte | Polymer solid electrolyte |
| Preparation method | Solvent vapor deposition method | Solvent impregnation method |
| EMC content relative to total weight of solid electrolyte (wt.%) | 1.2 | 12 |
| $t_R$ | 2.1 day | 0.021 day |
| to | 0.019 day | 0.019 day |
| $t_R$ / $t_D$ | 110 | 1.1 |
| $\sigma_i$(mS/cm) | 0.51 | 0.045 |

As shown in Table 1, it was confirmed that the $t_R$ / $t_D$ value and the ionic conductivity value of Example 1 are significantly higher than those of Comparative Example 1. It was confirmed that Example 1 is a polymer solid electrolyte prepared by solvent vapor deposition, and $t_R$ is relatively increased, thus resulting in improved ionic conductivity.

## Claims

1. A polymer solid electrolyte comprising:

a polymer containing PEO(polyethylene oxide)-based copolymer containing a crosslinkable functional group; and a polar compound,
wherein at least a part of the crosslinkable functional group forms a crosslinking bond with each other, so that the polymer forms a three-dimensional network structure, and
wherein the polar compound in a gaseous state is contained in the three-dimensional network structure or is bonded onto the polymer chain, and satisfies the following Equation 1:

<Equation 1>

$$\frac{t_R}{t_D} > 10$$

wherein, in Equation 1, $t_R$ is the relaxation time of the polymer chain,
$t_D$ is the diffusion time of the polar compound within the polymer chain, and is defined by the following Equation 2,

<Equation 2>

$$t_D = \frac{L^2}{2D}$$

wherein, in Equation 2, D is the diffusion coefficient of the polar compound within the polymer chain, which is $10^{-9}$ to $10^{-6}$ $cm^2/s$, and L is the thickness of the polymer solid electrolyte, which is 5 to 500 $\mu m$.

2. The polymer solid electrolyte according to claim 1, wherein the polar compound in a gaseous state is dispersed between polymer chains forming a three-dimensional network structure, or is adsorbed or bonded to the surface or

interior of the polymer chain.

**3.** The polymer solid electrolyte according to claim 1, wherein the polymer solid electrolyte further comprises a crosslinking agent, wherein at least a part of the crosslinkable functional group forms a crosslinking bond with each other through a crosslinking agent.

**4.** The polymer solid electrolyte according to claim 1, wherein the crosslinkable functional group is bonded to the PEO-based copolymer through an alkylene linker or alkylene oxide linker having 0 to 10 carbon atoms, provided that an alkylene linker having 0 carbon atoms represents a single bond, and
is selected from the group consisting of a hydroxyl group, a carboxyl group, an isocyanate group, a nitro group, a cyano group, an amine group, an amide group, an epoxy group and an allyl group.

**5.** The polymer solid electrolyte according to claim 1, further comprising a lithium salt dispersed on the polymer forming the three-dimensional network structure.

**6.** The polymer solid electrolyte according to claim 1, wherein the PEO (polyethylene oxide)-based copolymer is a copolymer containing repeating units of the following Chemical Formulas 1 to 3:

[Chemical Formula 1]

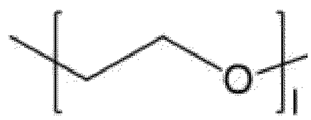

[Chemical Formula 2]

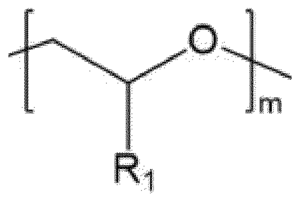

[Chemical Formula 3]

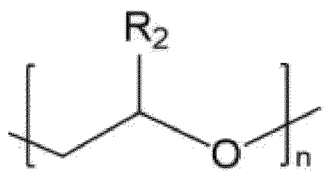

wherein, in Chemical Formulas 1 to 3, $R_1$ represents $-CH_2-O-(CH_2-CH_2-O)_k-R_3$, k is 0 to 20, $R_3$ represents an alkyl group having 1 to 5 carbon atoms,
$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms, provided that an alkylene linker having 0 carbon atoms represents a single bond, and
l, m and n are the number of repetitions of the repeating unit, wherein l and n are each independently an integer of 1 to 1000, and m is an integer of 0 to 1000.

**7.** The polymer solid electrolyte according to claim 1, wherein the content of the polar compound is 0.1% by weight or

more and less than 10% by weight, based on the total weight of the polymer solid electrolyte.

**8.** The polymer solid electrolyte according to claim 1, wherein the polar compound includes at least one selected from the group consisting of a carbonate-based compound and a sulfonyl-based compound.

**9.** The polymer solid electrolyte according to claim 1, further comprising a ceramic compound dispersed within a three-dimensional network structure of the polymer.

**10.** The polymer solid electrolyte according to claim 9, wherein the ceramic compound comprises an oxide-based solid electrolyte selected from lithium metal oxide or lithium metal phosphate.

**11.** The polymer solid electrolyte according to claim 9, wherein the ceramic compound comprises at least one oxide-based solid electrolyte selected from the group consisting of lithium-lanthanum-zirconium oxide(LLZO)-based compound, lithium-silicon-titanium phosphate(LSTP)-based compound, lithium-lanthanum-titanium oxide(LLTO)-based compound, lithium-aluminum-titanium phosphate(LATP)-based compound, lithium-aluminum-germanium phosphate(LAGP)-based compound, and lithium-lanthanum-zirconium-titanium oxide (LLZTO)-based compound.

**12.** An all solid-state battery comprising: a positive electrode; a negative electrode; and an electrolyte layer interposed between the positive electrode and the negative electrode and including the polymer solid electrolyte of any one of claims 1 to 11.

## INTERNATIONAL SEARCH REPORT

International application No. **PCT/KR2023/015792**

### A. CLASSIFICATION OF SUBJECT MATTER

**H01M 10/0565**(2010.01)i; **H01M 10/052**(2010.01)i; **C08G 65/24**(2006.01)i; **C08L 71/02**(2006.01)i; **C08K 3/013**(2018.01)i; **C08J 5/22**(2006.01)i

According to International Patent Classification (IPC) or to both national classification and IPC

### B. FIELDS SEARCHED

Minimum documentation searched (classification system followed by classification symbols)

H01M 10/0565(2010.01); H01M 10/052(2010.01); H01M 10/056(2010.01); H01M 10/40(2006.01); H01M 6/16(2006.01); H01M 6/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 가교 결합성 작용기 (crosslinking functional group), PEO계 코폴리머 (PEO based copolymer), 극성 화합물 (polar compound), 고분자 고체 전해질 (polymer solid electrolyte), 3차원 네트워크 구조 (three-dimensional network structure), 증기 증착 (vapor deposition)

### C. DOCUMENTS CONSIDERED TO BE RELEVANT

| Category* | Citation of document, with indication, where appropriate, of the relevant passages | Relevant to claim No. |
|---|---|---|
| X<br>Y | US 4822701 A (BALLARD, D. G. H. et al.) 18 April 1989 (1989-04-18)<br>See claims 1-3 and 9; and columns 1 and 9-10. | 1-8,12<br>9-11 |
| Y | KR 10-2018-0084137 A (SEEO, INC.) 24 July 2018 (2018-07-24)<br>See claims 1-2 and 6-10; and paragraphs [0026], [0030] and [0054]. | 9-11 |
| X | US 5001023 A (CHESHIRE, P. et al.) 19 March 1991 (1991-03-19)<br>See claims 1-5; and columns 1, 12-13 and 18. | 1-8,12 |
| A | BENEDETTI, J. E. et al. Cross-linked gel polymer electrolyte containing multi-wall carbon nanotubes for application in dye-sensitized solar cells. Journal of power sources. 2012, vol. 208, pp. 263-270.<br>See entire document. | 1-12 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 January 2024** | **16 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2023/015792

C. DOCUMENTS CONSIDERED TO BE RELEVANT

| Category* | Citation of document, with indication, where appropriate, of the relevant passages | Relevant to claim No. |
|---|---|---|
| A | JP 2003-017121 A (TREKION CO., LTD.) 17 January 2003 (2003-01-17)<br>See entire document. | 1-12 |

Form PCT/ISA/210 (second sheet) (July 2022)

**INTERNATIONAL SEARCH REPORT**
**Information on patent family members**

International application No.
**PCT/KR2023/015792**

| Patent document cited in search report | Publication date (day/month/year) | Patent family member(s) | Publication date (day/month/year) |
|---|---|---|---|
| US 4822701 A | 18 April 1989 | EP 0260847 A1 | 23 March 1988 |
| KR 10-2018-0084137 A | 24 July 2018 | CN 108475815 A | 31 August 2018 |
| | | CN 108475815 B | 28 June 2022 |
| | | EP 3398223 A1 | 07 November 2018 |
| | | EP 3398223 A4 | 31 July 2019 |
| | | EP 3398223 B1 | 30 June 2021 |
| | | JP 2019-503050 A | 31 January 2019 |
| | | JP 6757797 B2 | 23 September 2020 |
| | | KR 10-2114821 B1 | 25 May 2020 |
| | | US 10622672 B2 | 14 April 2020 |
| | | US 2017-0187063 A1 | 29 June 2017 |
| | | WO 2017-117306 A1 | 06 July 2017 |
| US 5001023 A | 19 March 1991 | EP 0331342 A2 | 06 September 1989 |
| | | EP 0331342 A3 | 26 June 1991 |
| | | JP 01-311573 A | 15 December 1989 |
| JP 2003-017121 A | 17 January 2003 | JP 5233024 B2 | 10 July 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220132781
- KR 1020230136064
- JP 6124713 A


### Non-patent literature cited in the description


- **TAPABRATA DAM, et al.** The ionic transport mechanism and coupling between the ion conduction and segmental relaxation processes of PEO20-LiCF3SO3 based ion conducting polymer clay composites. *Phys. Chem. Chem. Phys*, 2016, vol. 18, 19955-19965